Europäisches Patentamt

European Patent Office

Office européen des brevets

(19)

(11) Numéro de publication : **0 430 137 B1**

# (12) FASCICULE DE BREVET EUROPEEN

(45) Date de publication du fascicule du brevet :
22.02.95 Bulletin 95/08

(51) Int. Cl.⁶ : **H04M 19/08**

(21) Numéro de dépôt : **90122546.6**

(22) Date de dépôt : **26.11.90**

(54) **Agencement adaptateur pour circuit intégré de poste ou terminal téléphonique téléalimenté par une ligne de type analogique.**

(30) Priorité : **30.11.89 FR 8915801**

(43) Date de publication de la demande :
**05.06.91 Bulletin 91/23**

(45) Mention de la délivrance du brevet :
**22.02.95 Bulletin 95/08**

(84) Etats contractants désignés :
**AT BE CH DE DK ES FR GB IT LI NL SE**

(56) Documents cités :
**DE-A- 3 635 514**
**FR-A- 2 526 252**
**FR-A- 2 538 661**

(73) Titulaire : **ALCATEL BUSINESS SYSTEMS**
**12, rue de la Baume**
**F-75008 Paris (FR)**

(72) Inventeur : **Lemaire, Alain**
**25 Allée de la Sebille**
**F-95800 Cergy Saint Christophe (FR)**
Inventeur : **Castejon, Franck**
**43, rue Cartier-Bresson**
**F-93500 Pantin (FR)**

(74) Mandataire : **Weinmiller, Jürgen et al**
**Lennéstrasse 9**
**Postfach 24**
**D-82336 Feldafing (DE)**

EP 0 430 137 B1

## Description

L'invention concerne un agencement adaptateur pour circuit intégré de poste ou de terminal téléphonique téléalimenté par une ligne de type analogique.

L'alimentation en énergie électrique au moins partielle des postes ou terminaux téléphoniques, s'effectue classiquement depuis le commutateur téléphonique auquel ils sont rattachés et par l'intermédiaire des lignes téléphoniques les reliant à ce commutateur. Ce dernier comporte une unité d'alimentation très fiable reliée aux lignes téléphoniques par des équipements individuels.

Chaque équipement individuel est conçu pour assurer l'alimentation d'un type de poste ou terminal par l'intermédiaire d'un type de ligne, les caractéristiques limites respectives des uns et des autres ayant été définies à l'avance en fonction du service demandé.

En particulier, chaque équipement ne peut instantanément fournir qu'une quantité limitée d'énergie à la ligne téléphonique reliée a lui, cette quantité étant fixée en fonction des conditions, contraintes et possibilités envisagées pour l'exploitation considérée.

En raison de la coexistence de générations successives d' installations dont les provenances sont diverses, les postes et terminaux téléphoniques actuels doivent pouvoir s'adapter au cas par cas aux différentes installations, en tenant compte à chaque fois de celle des différentes normes d'application qui est en usage.

Un tel agencement est décrit dans le document FR-A-2 526 252.

Ceci présente de nombreux inconvénients, notamment pour les fabricants qui ont la possibilité technologique de regrouper, sur un même circuit intégré, les divers moyens nécessaires à l'obtention des diverses fonctionnalités d'un terminal ou d'un poste et qui sont gênés par la nécessité de prévoir des éléments supplémentaires modifiables à la demande et par conséquent situés hors circuit intégré, pour l'adaptation aux différentes normes en vigueur dans les différentes installations.

La présente invention propose donc un agencement adaptateur pour circuit intégré de poste ou de terminal téléphonique téléalimenté au travers des deux fils ,dits de conversation, d'une ligne téléphonique de type analogique destinée à être bouclée sur elle-même au niveau du poste ou terminal considéré au travers d'un organe de commutation, de type transistor, lors des communications au moyen du poste ou terminal dont ledit circuit intégré regroupe au moins l'essentiel des circuits intégrables élémentaires nécessaires à l'obtention des diverses fonctionnalités, notamment téléphoniques. L'agencement adaptateur est muni de moyens d'interface pour l'adaptation du poste ou terminal téléphonique, en vue du respect des contraintes d'alimentation qui sont susceptibles de lui être imposées sur son lieu d'installation. Ces moyens d'interface sont reliés aux fils de ligne par l'intermédiaire de moyens redresseurs fournissant une alimentation en courant continu et au travers de l'organe de commutation de manière à réguler le courant continu fourni aux circuits du poste ou terminal situés en aval.

Selon une caractéristique de l'invention, les moyens d'interface dudit agencement adaptateur comportent un montage de contrôle de courant, sensible à la tension d'alimentation appliquée aux circuits dits situés en aval et à une tension fixe de référence interne au circuit intégré dans lequel le montage de contrôle de courant est essentiellement incorporé, ce montage agissant sur la base du transistor de l'organe de commutation de manière à réguler le courant de commande circulant par cette base en liaison avec une résistance, située à l'extérieur du circuit intégré pour pouvoir être remplacée, de même qu'une impédance d'adaptation insérée entre le transistor de l'organe de commutation et la borne d'alimentation positive des circuits, dits situés en aval, par rapport à la ligne téléphonique.

L'invention, ses caractéristiques et ses avantages sont précisés dans la description qui suit en liaison avec les figures répertoriées ci-dessous.

La figure 1 présente un schéma de principe simplifié d'un poste ou terminal téléphonique.

La figure 2 présente un exemple de gabarit normalisé d'alimentation pour poste ou terminal téléphonique.

La figure 3 présente un diagramme théorique de définition de gabarit sur lequel la tension en ligne est figurée en abscisse et le courant présent en ligne est en ordonnée.

La figure 4 présente le schéma d'un agencement adaptateur selon l'invention.

L'agencement adaptateur 1 selon l'invention est destiné à être incorporé dans un poste ou terminal téléphonique 2 destiné à être partiellement ou totalement téléalimenté à partir d'un commutateur téléphonique de rattachement par l'intermédiaire d'une ligne téléphonique 3, de type analogique, à laquelle ce poste ou terminal téléphonique est raccordé.

Le commutateur téléphonique qui est par exemple un classique autocommutateur téléphonique, non représenté, auquel viennent notamment se raccorder des lignes teléphoniques d'abonné, telles que la ligne 3, qui aboutissent à cet effet à des équipements individuels, dits de ligne, permettant chacun, d'une part, une transmission bidirectionnelle de signaux sous forme analogique entre un poste ou terminal téléphonique distant et son commutateur de rattachement, dans lequel se trouve l'équipement considéré, et, d'autre part, la téléalimentation du poste ou terminal à partir de ce commutateur.

A cet effet, la ligne téléphonique 3 qui comporte au moins une paire de fils L1, L2 pour l'échange des signaux et notamment de ceux dits de conversation, est reliée par ces deux fils aux bornes d'un générateur de courant continu, non représenté, au niveau de l'équipement de ligne, également non représenté, auquel cette ligne vient se raccorder dans son commutateur de rattachement.

Les fils L1, L2 d'une ligne téléphonique 3, de type analogique aboutissent classiquement à deux bornes d'entrée d'un pont à diodes 4, via un circuit de protection, dans le poste ou terminal téléphonique qu'ils desservent. Ce circuit de protection, placé en amont du pont à diodes 4, est ici classiquement symbolisé par une résistance de limitation de courant 5, connectée en série sur le fil L1 en entrée de poste, et par un dispositif antisurtension 6 inséré entre les deux fils L1, L2.

La tension appliquée aux bornes d'entrée du pont à diodes 4 par le commutateur de rattachement, via les fils L1 et L2, permet la fourniture d'un courant continu de téléalimentation au poste ou terminal téléphonique 2 dès qu'une boucle de continuité est établie dans ce poste ou terminal entre ces fils.

Cette possibilité de bouclage est ici symbolisée par un contact CC1 de crochet commutateur destiné à être classiquement activé à la fermeture par le décrochage du combiné du poste et à l'ouverture par son raccrochage. Ce bouclage de continuité peut être réalisé par d'autres moyens, par exemple par actionnement d'un transistor de commutation, dit interrupteur de boucle et non représenté car classique, qui est notamment susceptible d'être commandé par l'intermédiaire d'une touche spécialisée, dite d'appel sans décrochage, du poste ou terminal considéré.

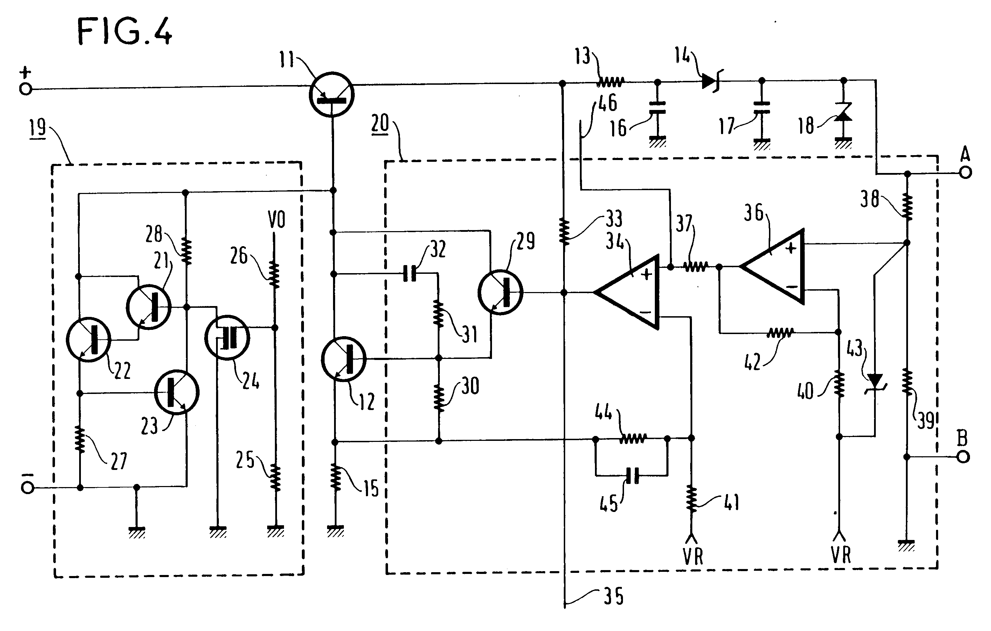

Les bornes de sortie polarisées + et - du pont à diodes 4 sont connectées à l'agencement adaptateur 1 qui est ici montré monté en parallèle au contact CC1 dans la mesure où il est supposé comporter un transistor interrupteur de boucle - voir figure 4 -.

Cet agencement adaptateur 1 assure l'adaptation dynamique du poste ou terminal téléphonique 2 qu'il comporte au cours des différentes phases d'exploitation de manière que soient respectées les différentes conditions imposées que résume le gabarit de boucle retenu pour ce type de poste ou terminal avec le type de commutateur auquel il est rattaché.

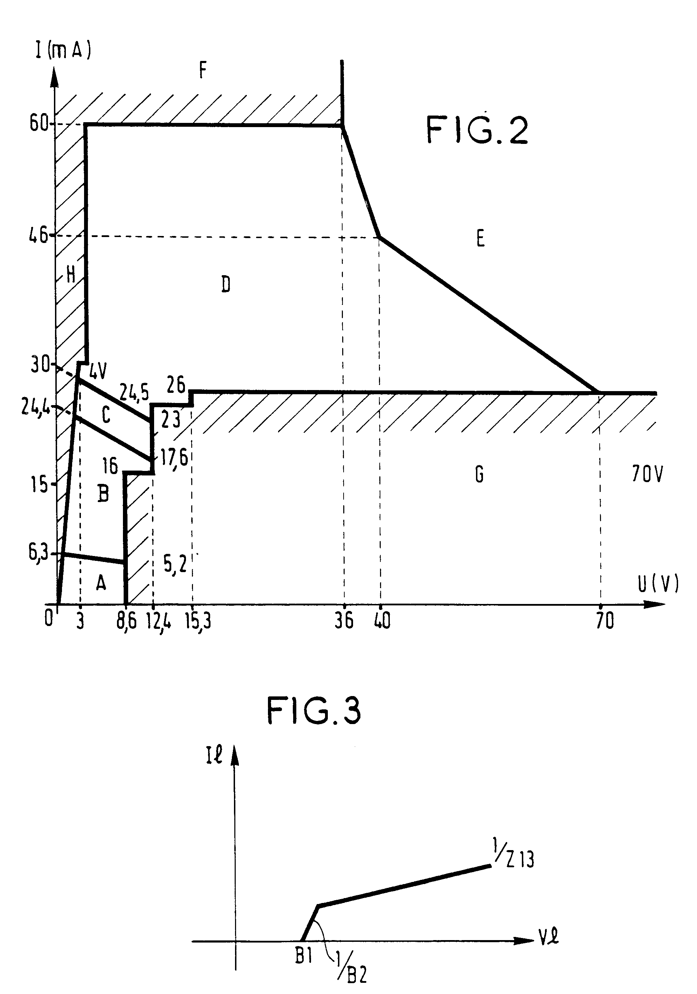

Un exemple de gabarit de boucle est présenté en figure 2, il définit les limites à respecter pour la consommation d'un poste au cours des différentes phases d'exploitation au moyen d'un diagramme où les tensions d'alimentation sont portées en abscisse alors que les courants d'alimentation sont en ordonnée. Dans cet exemple de gabarit huit plages référencées de A à H sont définies, les zones hachurées bordent la zone autorisée, la stabilité du poste devant être garantie dans les plages référencées B,C et D, alors que les zones F,G et H sont interdites en régime continu.

L'agencement adaptateur 1 est lui-même placé en amont des autres circuits et équipements du poste ou terminal téléphonique 2 par rapport à la ligne téléphonique 3, au circuit de protection et au pont à diodes 4, il en permet au moins partiellement l'alimentation en énergie électrique, via des bornes d'alimentation ici référencées A et B.

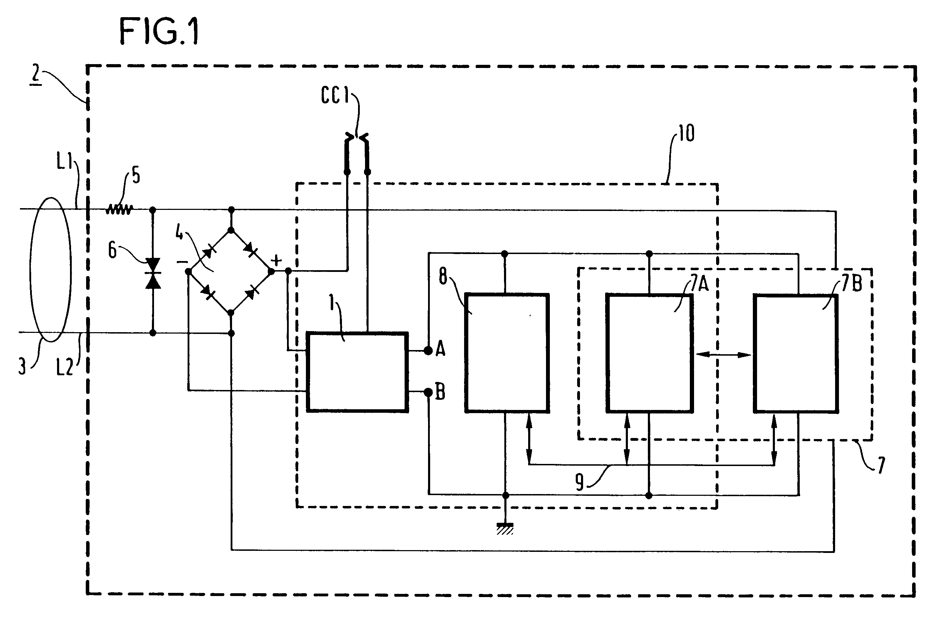

Ces autres circuits et équipements, respectivement référencés 7A et 7B sur la figure 1, sont essentiellement ceux qui servent à l'exploitation téléphonique du poste ou terminal et sont en conséquence regroupés ici en un ensemble 7, dit d'exploitation, certains de ces circuits et/ou équipements sont supervisés par une logique de gestion 8.

Les fonctions remplies par les circuits 7A ou par les équipements 7B qui sont connus en eux-mêmes sont notamment une fonction audio, une fonction duplexeur, une fonction de signalisation téléphonique via la ligne 3, pour lesquelles ces circuits 7A et ces équipements 7B sont éventuellement reliés aux fils de ligne 3, en aval du circuit de protection et en parallèle aux bornes d'entrée du pont à diodes 4. Ces liaisons entre ligne 3 et circuits ou équipements 7A, 7b ne seront pas détaillées ici étant symbolisées par les deux liaisons reliant l'ensemble 7 aux bornes d'entrée du pont à diodes 4. Les équipements 7A de l'ensemble 7 comprennent par exemple des transducteurs sonores d'émission et de réception du poste ou terminal et leurs éventuels amplificateurs ainsi qu'éventuellement un ou des afficheurs.

Les circuits 7A de l'ensemble 7 incluent par exemple un circuit de conversion deux fils-quatre fils, un générateur de signalisation décimale ou multifréquence, etc...

La logique de gestion 8 est le plus souvent organisée autour d'au moins un microprocesseur auquel est associé un ensemble de mémoires mortes ou vives, au moins une liaison de transmission de données 9 relie la logique de gestion 8 aux circuits et équipements qu'elle supervise dans l'ensemble 7.

Dans un exemple préféré de réalisation les circuits de l'ensemble 7 , la logique de gestion 8 et tous les éléments constitutifs de l'agencement adaptateur 1 qui sont susceptibles d'être incorporés dans un circuit intégré sont réunis dans un tel circuit qui est référencé 10 sur la figure 1.

Seuls sont présentés ici et plus précisément sur la figure 4, les éléments constitutifs de l'agencement adaptateur 1 et ceux du poste ou terminal dont il fait partie, qui lui sont associés, car seul cet agencement adaptateur fait l'objet de la présente invention.

Comme montré sur la figure 1, l'agencement adaptateur est connecté, d'une part, aux bornes de sortie du pont à diodes 4, symbolisées par la borne + et par la masse sur les figures 1 et 4, d'autre part aux bornes d'alimentation A et B de la logique de gestion 8 et de l'ensemble 7.

La borne de sortie + est elle-même reliée à la borne A par l'intermédiaire d'un transistor de commutation 11 qui est le transistor interrupteur de boucle du poste ou terminal dont fait partie l'agencement adaptateur considéré.

Ce transistor 11, qui est ici de type PNP, est commandé de manière connue en soi par l'intermédiaire d'un transistor 12, de type NPN, constituant le second étage d'un premier circuit Darlington.

A cet effet le collecteur du transistor 12 est relié à la base du transistor interrupteur de boucle 11, dont l'émetteur est relié à la borne de sortie + et dont le collecteur est relié à la borne d'alimentation A, via une impédance 13, complexe, et une diode 14, de type Schottky.

L'impédance 13 est l'impédance d'adaptation du poste ou terminal à la ligne qui, de manière connue, doit tenir compte du passage de signaux basse fréquence et qui doit être déterminée en fonction des caractéristiques de la ligne et du commutateur de rattachement auquel aboutit cette ligne.

Cette impédance d'adaptation 13 est susceptible de varier notablement suivant les lignes, les commutateurs et bien entendu le poste ou terminal dans lequel l'agencement adaptateur 1 est inclus, elle ne peut donc être incorporée dans le circuit intégré 10 où une partie des éléments constitutifs de cet agencement adaptateur sont incorporés. Il en est de même pour les transistors 11 et 12, pour une résistance 15 en série avec le transistor 12, pour la diode 14, pour deux condensateurs 16 et 17 ainsi que pour une autre diode 18.

Le transistor 11 ne peut actuellement être intégré dans la mesure où, de manière connue, il est susceptible d'être amené à commuter des puissances relativement grandes et à supporter des tensions relativement élevées.

Le transistor 12, qui commande la base du transistor interrupteur de boucle 11, est susceptible d'être amené à absorber et par conséquent dissiper une énergie relativement importante, car il est ici utilisé comme régulateur, il n'est donc pas incorporé dans le circuit intégré 10. Il en est de même pour la résistance 15 insérée entre l'émetteur de ce transistor 12 et la masse. La diode 14 est insérée entre l'impédance complexe 13, à laquelle elle est reliée par sa cathode, et la borne d'alimentation A qui est positive, en aval du transistor 11 par rapport à la borne de sortie + du pont à diodes, elle présente classiquement une très faible chute de tension dans le sens passant . Elle est placée entre les deux condensateurs 16 et 17 qui sont respectivement insérés l'un entre la masse et le point commun à la cathode de la diode 14 et l'autre la masse et l'anode de cette diode 14.

Le condensateur 16 est un condensateur de filtrage, alors que le condensateur 17 est un condensateur réservoir permettant de maintenir temporairement l'alimentation au niveau des bornes A et B en cas de coupure de courte durée de l'alimentation par le transistor 11, par exemple en cas de numérotation par ouverture de boucle. Ces deux condensateurs 16 et 17 qui sont classiquement de type électrochimique, ne sont bien entendu pas susceptibles d'être incorporés dans le circuit intégré 10, de même que la diode 18 qui est une diode de protection de type Zener destinée à protéger les circuits situés en aval, c'est-à-dire connectés aux bornes d'alimentation A et B. La diode 14 n'est pas non plus incorporée dans le circuit intégré 10, elle est prévue pour permettre la charge du condensateur réservoir 17 en empêchant le transfert indésirable de charges du condensateur réservoir 17 vers le condensateur de filtrage 16, en cas de coupure d'alimentation.

Les autres éléments constitutifs de l'agencement adaptateur 1 sont par contre incorporés dans le circuit intégré 10, ils forment ici un montage de démarrage 19 à la mise sous tension, lors de la fermeture de boucle, et un montage de contrôle du courant 20.

Le montage de démarrage 19 est destiné à favoriser la montée rapide de la tension d'alimentation V0 aux bornes d'alimentation A,B pour que cette tension ait toujours atteint sa valeur normale de fonctionnement en un temps limité fixé, quelle que soit la charge initiale des condensateurs et notamment du condensateur réservoir 17. Il commande donc le passage d'un courant dans le transistor 11 qui permet une charge rapide des condensateurs concernés, en particulier à la mise sous tension du poste ou terminal.

Ce montage de démarrage 19 comporte ici un second circuit Darlington constitué par deux transistors 21 et 22, de type NPN, dont les collecteurs sont reliés en parallèle à la base du transistor interrupteur de boucle 11.

La base du transistor 21 qui constitue le premier étage de ce second circuit Darlington, est reliée d'une part au collecteur d'un transistor 23, de type NPN, dont l'émetteur est relié à la masse, d'autre part au drain d'un transistor 24, de type MOS. La source du transistor 24 est reliée à la masse et sa grille est commandée en tension au travers d'un pont diviseur à résistances 25,26 au point commun duquel est reliée cette grille et aux bornes d'extrémité duquel est appliquée la tension V0, présente entre les bornes d'alimentation A et B. Les émetteurs des transistors 22 et 23 sont reliés à la masse, le premier via une résistance 27 et le second directement. La base du transistor 23 est connectée au point commun à l'émetteur du transistor 22 et à la résistance 27, une résistance 28 relie de plus la base du transistor 21 au point commun à son collecteur et à la base du transistor 11.

C'est la valeur de la résistance 27 qui fixe la valeur du courant au démarrage, tant que la tension aux bornes du pont à résistances 24, 25 n'a pas atteint la valeur V0 fixée.

Comme indiqué plus haut l'agencement adaptateur selon l'invention comporte aussi un montage de contrôle de courant 20.

Ce montage de contrôle de courant 20 agit sur la base du transistor interrupteur de boucle 11 par l'intermédiaire du premier circuit Darlington qui comporte le transistor 12 et un transistor 29. Le transistor 12 est situé hors du circuit intégré 10 pour réduire la dissipation thermique de ce dernier, le transistor 29, de type NPN, est incorporé dans le circuit intégré 10 et commande classiquement la base du transistor 12 par son propre émetteur. De manière classique les collecteurs des transistors 12, 29 sont reliés à la base du transistor interrupteur de boucle 11 qu'ils contrôlent et la base du transistor 12 est aussi connectée à son émetteur par une résistance 30 et à son collecteur par une résistance 31 en série avec un condensateur 32.

La base du transistor 29 est reliée au collecteur du transistor 11 par une résistance 33, elle est susceptible d'être contrôlée soit par un signal provenant d'un amplificateur opérationnel 34, soit par un signal de commande d'ouverture de boucle provenant de l'ensemble 7 que contient le circuit intégré 10, via une liaison de commande 35.

L'amplificateur opérationnel 34 reçoit les signaux audio émanant du poste sur son entrée non-inverseuse , via la liaison 46, il est aussi relié à la sortie d'un amplificateur opérationnel de régulation 36 par son entrée non-inverseuse, via une résistance 37. L'amplificateur opérationnel 36 est lui-même relié par son entrée non-inverseuse au point commun aux résistances 38,39 d'un pont diviseur aux extrémités duquel est appliquée la tension d'alimentation V0. Les entrées inverseuses des amplificateurs opérationnels 34 et 36 sont respectivement reliées chacune à un potentiel de référence VR fixe du circuit intégré 10, l'une via une résistance 40 et l'autre via une résistance 41.

Une résistance 42 boucle la sortie de l'amplificateur opérationnel 36 sur son entrée inverseuse, cette résistance 42 est choisie de valeur G.R40, G étant le gain choisi pour l'amplificateur opérationnel 36 et R40 la valeur de la résistance 40. Une diode 43, de type Schottky, relie aussi le point commun aux résistances 38, 39 avec l'extrémité de la résistance 40 connectée au potentiel de référence VR, elle permet de limiter la différence de potentiel entre les entrées de l'amplificateur opérationnel 36 lorsque la tension V0 augmente au delà d'une valeur prédéterminée.

Une boucle de réaction est créée au niveau de l'amplificateur opérationnel 34 par l'intermédiaire d'une résistance 44 en parallèle avec un condensateur 45 entre l'émetteur du transistor 12 et l'entrée inverseuse de cet amplificateur opérationnel 34.

Pour de faibles courants de ligne , la consommation imposée par le circuit intégré 10, c'est-à-dire essentiellement par l'ensemble 7 et par la logique 8, est telle que le courant traversant l'impédance d'adaptation 13 reste limité. La tension V0 reste trop faible pour que la diode 18 conduise et l'on a pratiquement un circuit correspondant à une source de courant, toute variation du courant disponible en ligne au niveau de la borne de sortie + du pont à diodes 4 se retrouvant au niveau de la borne d'alimentation A.

Si Vli est la tension en sortie du pont à diodes 4, au niveau des bornes + et -, il est possible d'écrire l'expression : $Vli = B1 + B2.Ili$ dans laquelle B1 correspond à la tension en sortie de pont à diodes quand le courant fourni est nul , B2 correspond à la résistance série présentée par le générateur théorique que constitue l'agencement adaptateur et Ili le courant fourni par le pont à diodes.

Le terme B1 peut être considéré comme défini par l'expression : $B1 = Vd + C1.VR$ dans laquelle Vd est la chute de tension aux bornes de la diode 14 et où le terme C1 est défini par l'expression : $C1 = (2G + 1)(R38 + R39)(Z13 + RAB)/R15((R38 + R39) + 2(G + 1)R39.RAB)$ G ayant été défini plus haut, R15, R38, R39 étant les valeurs des résistances 15, 38, 39; Z13 étant la valeur de l'impédance 13 et RAB étant la valeur de la résistance de charge présente aux bornes d'alimentation A, B du fait de la présence de l'ensemble 7 et de la logique de gestion 8.

Le terme B2 peut être considéré comme défini par l'expression :
$B2 = R15(R38 + R39)(Z13 + RAB)/(R15(R38 + R39) + 2(G + 1)R39.RAB)$

La diode 18 fixe la valeur maximale de la tension d'alimentation V0 admise à partir duquel l'agencement adaptateur fonctionne comme une source de courant constant, toute variation du courant étant alors prise en compte par l'impédance 13, on peut alors écrire l'expression : $Vli = B3 + Z13.Ili$ dans laquelle $B3 = Vd - (Z13/R15 - 1)Vz$ Vz étant la tension aux bornes de l'impédance 13.

En conséquence comme schématisé sur la figure 3, il est possible d'adapter un poste ou terminal téléphonique aux exigences définies par un gabarit, tel que symbolisé en figure 2, par action au niveau d'une impédance d'adaptation, telle que 13, et d'une résistance, telle que 15 de l'agencement adaptateur, sans modifier les éléments constitutifs de l'agencement adaptateur qui sont incorporés dans le circuit intégré 10. En effet, ces éléments constitutifs R15 et Z13 permettent d'agir sur les pentes 1/B2 ou 1/Z13 des segments de droite de charge pour un poste ou terminal alimenté par l'intermédiaire d'une ligne téléphonique analogique en fonction des contraintes imposées comme le symbolise la figure 3.

## Revendications

1. Agencement adaptateur pour circuit intégré (10) de poste ou de terminal téléphonique téléalimenté au travers des deux fils , dits de conversation, d'une ligne téléphonique (3), de type analogique, destinée à être bouclée sur elle-même au niveau du poste ou terminal considéré au travers d'un organe de commutation (11), de type transistor, lors des communications au moyen du poste ou terminal dont ledit circuit intégré regroupe au moins l'essentiel des circuits intégrables élémentaires nécessaires à l'obtention des diverses fonctionnalités, notamment téléphoniques, l'agencement adaptateur étant muni de moyens d'interface (1) pour l'adaptation du poste ou terminal téléphonique, en vue du respect des contraintes d'alimentation qui sont susceptibles de lui être imposées sur son lieu d'installation, les dits moyens d'interface étant reliés aux fils de ligne (3), par l'intermédiaire de moyens redresseurs (4) fournissant une alimentation en courant continu et au travers de l'organe de commutation (11) de manière à réguler le courant continu fourni aux circuits (7,8) du poste ou terminal situés en aval, caractérisé en ce que les moyens d'interface dudit agencement adaptateur comportent un montage de contrôle de courant (20), sensible à la tension d'alimentation (V0) appliquée aux circuits (7,8) dits situés en aval et à une tension fixe de référence (VR) dudit circuit intégré (10) dans lequel ledit montage de contrôle est essentiellement incorporé, ce montage (20) agissant sur la base du transistor de l'organe de commutation (11) de manière à réguler le courant de commande circulant par cette base en liaison avec une résistance d'adaptation (15) située à l'extérieur du circuit intégré (10) pour pouvoir être remplacée, de même qu'une impédance d'adaptation (13) insérée entre le transistor de l'organe de commutation et la borne d'alimentation positive (A) des circuits (7,8) dits situés en aval par rapport à la ligne téléphonique.

2. Agencement adaptateur, selon la revendication 1 , caractérisé en ce qu'il est doté de moyens d'interface comprenant essentiellement une résistance d'adaptation (15) située en série avec la base du transistor de l'organe de commutation (11), en vue de l'adaptation du poste ou terminal à faible puissance, une impédance d'adaptation (13), pour les puissances plus élevées, située en série avec la liaison émetteur-collecteur du transistor dudit organe de commutation entre ce dernier et l'une des bornes d'alimentation (A) des circuits (7,8) dits situés en aval, ainsi qu'une diode (18) de limitation de tension d'alimentation montée en parallèle aux bornes d'alimentation (A,B), cette diode étant à l'extérieur du circuit intégré de même que la résistance et l'impédance d'adaptation .

3. Agencement adaptateur, selon la revendication 2 , caractérisé en ce que le montage de contrôle de courant (20) agit sur le courant circulant par la base du transistor de l'organe de commutation (11) par l'intermédiaire d'un transistor de commande (12) inséré en série par sa liaison collecteur-émetteur entre ladite base et la résistance d'adaptation (15), ledit transistor de commande étant situé à l'extérieur du circuit intégré de même que le transistor de l'organe de commande et la résistance d'adaptation, pour réduire d'autant la dissipation au niveau du circuit intégré (10).

4. Agencement adaptateur, selon la revendication 3 , caractérisé en ce que le transistor de commande (12) du montage de contrôle de courant (20) est incorporé dans un montage Darlington dont le premier transistor (29), qui agit sur la base du transistor de commande (12) par l'intermédiaire de son propre émetteur, est incorporé dans le circuit intégré (10).

5. Agencement adaptateur, selon la revendication 4, caractérisé en ce que le premier transistor (29) du montage Darlington du montage de contrôle de courant (20) est commandé par l'intermédiaire d'au moins un amplificateur opérationnel (36), à gain fixé , recevant la tension de référence (VR) du circuit intégré (10) sur l'une de ses deux entrées et, sur l'autre, une fraction de la tension d'alimentation (V0) des circuits (7,8) dits situés en aval qui lui est fournie par l'intermédiaire d'un pont diviseur à résistances (38,39), situé dans le circuit intégré (10) avec l'amplificateur opérationnel (36), le premier transistor (29) et une diode (43) de limitation de la tension maximale entre entrées dudit amplificateur opérationnel à gain fixé.

6. Agencement adaptateur, selon la revendication 2, caractérisé en ce qu'il comporte un condensateur réservoir (17) inséré en parallèle à la diode de limitation de tension d'alimentation (18) entre une diode de séparation (14), en série avec l'impédance d'adaptation (13), et la diode de limitation de tension (18) en amont de la borne d'alimentation (A) correspondante et à l'extérieur du circuit intégré (10) pour maintenir l'alimentation des circuits (7,8) dits situés en aval, lors des coupures dues aux brèves ouvertures de boucle.

7. Agencement adaptateur, selon la revendication 2, caractérisé en ce qu'il comporte un montage de démarrage (19) pour assurer une montée de la tension d'alimentation (V0) aux bornes d'alimentation (A,B) à sa valeur normale de fonctionnement en un temps inférieur à une limite fixée, quelle que soit la charge initiale des condensateurs (16,17) concernés du poste ou terminal, ledit montage de démarrage, directement alimenté par les moyens redresseurs (4) et sensible à la tension d'alimentation (V0), agissant sur le courant circulant par la base du transistor de l'organe de commutation (11).

**Patentansprüche**

1. Adapter für eine integrierte Schaltung (10) eines über die beiden Sprachsignalübertragungsdrähte einer analogen Telefonleitung (3) ferngespeisten Telefonendgeräts, wobei die Telefonleitung in Höhe des betrachteten Telefonendgeräts über ein Schaltorgan (11) vom Transistortyp während der Gespräche mit Hilfe des Endgeräts in Schleife geschlossen sein soll, wobei die integrierte Schaltung mindestens die wesentlichen integrierbaren elementaren Schaltungen zusammengefaßt enthält, die für die verschiedenen Aufgaben, insbesondere des Telefonbetriebs, erforderlich sind, wobei der Adapter Schnittstellenmittel (1) zur Anpassung des Telefonendgeräts besitzt, um die Speisebedingungen zu erfüllen, die an seinem Betriebsort gefordert werden können, wobei die Schnittstellenmittel an die Leitungsdrähte (3) über Gleichrichtermittel (4), die eine Gleichstromspeisung liefern, sowie über das Schaltorgan angeschlossen sind, so daß der an die stromab liegenden Schaltungen (7, 8) des Telefonendgeräts gelieferte Gleichstrom geregelt wird, dadurch gekennzeichnet, daß die Schnittstellenmittel des Adapters eine Stromregelschaltung (20) aufweisen, die auf die an die stromabwärts liegenden Schaltungen (7, 8) angelegte Speisespannung (V0) und auf eine feste Bezugsspannung (VR) der integrierten Schaltung (10) anspricht, in der die Regelschaltung im wesentlichen enthalten ist, wobei die Stromregelschaltung (20) auf die Basis des Transistors des Schaltorgans (11) so einwirkt, daß sie den Steuerstrom durch diese Basis in Verbindung mit einem Anpassungswiderstand (15) regelt, der außerhalb der integrierten Schaltung (10) liegt, um ebenso wie eine Anpassungsimpedanz (13) ausgetauscht werden zu können, die zwischen den Transistor des Schaltorgans und die positive Speiseklemme (A) der stromabwärts bezüglich der Telefonleitung liegenden Schaltungen (7, 8) eingefügt ist.

2. Adapter nach Anspruch 1, dadurch gekennzeichnet, daß er Schnittstellenmittel enthält, die im wesentlichen einen Anpassungswiderstand (15) in Reihe mit der Basis des Transistors des Schaltorgans (11), um das Endgerät an einen geringen Leistungsverbrauch anzupassen, eine Anpassungsimpedanz (13) für größeren Leistungsverbrauch, die in Reihe mit der Emitter-Kollektor-Verbindung des Transistors des Schaltorgans zwischen diesem und einer der Speiseklemmen (A) der stromabwärts gelegenen Schaltungen (7, 8) angeschlossen ist, sowie eine Diode (18) zur Begrenzung der Speisespannung enthält, die parallel zu den Speiseklemmen (A, B) liegt und ebenso wie der Impedanzanpassungswiderstand außerhalb der integrierten Schaltung angeordnet ist.

3. Adapter nach Anspruch 2, dadurch gekennzeichnet, daß die Stromregelschaltung (20) auf den Strom einwirkt, der durch die Basis des Transistors des Schaltorgans (11) über einen Steuertransistor (12) fließt, dessen Emitter-Kollektor-Verbindung in Reihe mit der Basis und dem Anpassungswiderstand (15) liegt, wobei der Regeltransistor sowie der Transistor des Steuerorgans und der Anpassungswiderstand außerhalb der integrierten Schaltung liegen, um die Wärmeentwicklung in der integrierten Schaltung entsprechend zu verringern.

4. Adapter nach Anspruch 3, dadurch gekennzeichnet, daß der Steuertransistor (12) der Stromregelschaltung (20) in die Darlingtonschaltung integriert ist, deren erster Transistor (29), der auf die Basis des Steuertransistors (12) über seinen eigenen Emitter einwirkt, in die integrierte Schaltung (10) eingebaut ist.

5. Adapter nach Anspruch 4, dadurch gekennzeichnet, daß der erste Transistor (29) der Darlingtonschaltung in der Stromregelschaltung (20) über mindestens einen Operationsverstärker (36) mit festem Verstärkungsgrad gesteuert wird, der die Bezugsspannung (VR) der integrierten Schaltung (10) an einem seiner beiden Eingänge und einen Bruchteil der Speisespannung (V0) der stromabwärts gelegenen Schaltungen (7, 8) an seinem anderen Eingang über einen Spannungsteiler mit Widerständen (38, 39) empfängt, der zusammen mit dem Operationsverstärker (36), dem ersten Transistor (29) und einer die Spannung zwischen den Eingängen des Operationsverstärkers mit festem Verstärkungsgrad begrenzende Diode (43) in der integrierten Schaltung (10) untergebracht ist.

6. Adapter nach Anspruch 2, dadurch gekennzeichnet, daß er einen Speicherkondensator (17) aufweist, der parallel zur Speisespannungsbegrenzungsdiode (18) zwischen eine Trenndiode (14) in Reihe mit der Anpassungsimpedanz (13) und die Spannungsbegrenzungsdiode (18) vor der entsprechenden Speiseklemme (8) und außerhalb der integrierten Schaltung (10) eingefügt ist, um die Speisung der stromabwärts gelegenen Schaltungen (7, 8) während Unterbrechungen aufgrund kurzer Schleifenöffnungen aufrechtzuerhalten.

7. Adapter nach Anspruch 2, dadurch gekennzeichnet, daß er eine Startschaltung (19) aufweist, um einen Anstieg der Speisespannung (VO) an den Speiseklemmen (A, B) auf den normalen Betriebswert in einer Zeit unterhalb eines festen Grenzwerts zu gewährleisten, unabhängig von der ursprünglichen Ladung der in dem Endgerät betroffenen Kondensatoren (16, 17), wobei die Startschaltung, die unmittelbar von den Gleichrichtermitteln (4) gespeist wird und auf die Speisespannung (VO) anspricht, den Strom steuert, der in der Basis des Transistors des Schaltorgans (11) fließt.

**Claims**

1. Integrated circuit adapter arrangement (10) for a telephone or telephone terminal supplied with power by remote power feed over two speech wires of an analogue telephone line (3) adapted to be looped at the telephone or terminal through a transistor switch (11) during communications via the telephone or terminal whose said integrated circuit comprises at least most of the basic circuits suitable for integration providing various functions, including telephone functions, the adapter arrangement having interface means (1) for adaptation of the telephone or terminal to conform to power supply constraints that apply to it at its place of installation, said interface means being connected to the line wires (3) by rectifier means (4) providing a direct current power supply and via the switch (11) in such a way as to regulate the direct current supplied to the downstream circuits (7, 8) of the telephone, characterised in that the interface means of said adapter arrangement include a current control circuit (20) responsive to the supply voltage (V0) applied to said downstream circuits (7, 8) and a fixed reference voltage (VR) of said integrated circuit (10) into which said control circuit is essentially incorporated, this circuit (20) acting on the base of the transistor of the switch (11) in such a way as to regulate the control current flowing through said base in conjunction with a matching resistor (15) external to the integrated circuit (10) so that it can be replaced and a matching impedance (13) between the transistor of the switch and the positive power supply terminal (A) of said downstream circuit (7, 8) relative to the telephone line.

2. Adapter arrangement according to claim 1 comprising interface means essentially comprising a matching resistor (15) in series with the base of the transistor of the switch (11) in order to match the telephone or terminal at low power, a matching impedance (13) for higher powers in series with the emitter-collector junction of the transistor of said switch between the latter and one of the power supply terminals (A) of said downstream circuits (7, 8), and a supply voltage limiter diode (18) connected in parallel with the power supply terminals (A, B), said diode being external to the integrated circuit and likewise the matching resistor and the matching impedance.

3. Adapter arrangement according to claim 2 characterised in that the current monitoring circuit (20) acts on the current flowing through the base of the transistor of the switch (11) by means of a control transistor (12) with its collector-emitter junction connected in series between said base and the matching resistor (15), said control transistor being external to the integrated circuit likewise the transistor of the control unit and the matching resistor, to reduce commensurately dissipation by the integrated circuit (10).

4. Adapter arrangement according to claim 3 characterised in that the control transistor (12) of the current control circuit (20) is incorporated into a Darlington circuit the first transistor (29) of which, operating on the base of the control transistor (12) through its own emitter, is incorporated into the integrated circuit (10).

5. Adapter arrangement according to claim 4 characterised in that the first transistor (29) of the Darlington circuit of the current control circuit (20) is controlled by at least one fixed gain operational amplifier (36) receiving the reference voltage (VR) from the integrated circuit (10) at one of its two inputs and, at the other input, a fraction of the supply voltage (V0) of said downstream circuit (7, 8) supplied to it by means of a resistor divider bridge (38, 39) included in the integrated circuit (10) with the operational amplifier (36), the first transistor (29) and a diode (43) for limiting the maximal voltage between inputs of said fixed gain operational amplifier.

6. Adapter arrangement according to claim 2 characterised in that it includes a reservoir capacitor (17) in parallel with the power supply voltage limiter diode (18) between a separator diode (14) in series with the matching impedance (13) and the voltage limiter diode (18) on the input side of the respective power supply terminal (A) and external to the integrated circuit (10) to maintain the power supply to said downstream circuit (7, 8) in the event of interruptions due to brief loop disconnection.

7. Adapter arrangement according to claim 2 characterised in that it comprises a start-up circuit (19) whereby the supply voltage (V0) at the power supply terminals (A, B) rises to its normal operating value in a time less than a fixed limiting time, regardless of the initial charge on the capacitors (16, 17) concerned of the telephone or terminal, said start-up circuit, supplied with power directly by the rectifier means (4) and responsive to the power supply voltage (V0), operating on the current flowing through the base of the transistor of the switch (11).

FIG.1

FIG.2

FIG.3

# FIG.4

EP 0 430 137 B1